# EUROPEAN PATENT SPECIFICATION

(11) **EP 3 519 369 B1**
(45) Date of publication and mention of the grant of the patent: **30.11.2022**
(21) Application number: 16781310.4
(22) Date of filing: 30.09.2016
(51) Int. Cl.: C04B 7/44

(54) **PROCESS ENABLING THE USE ALTERNATIVE FUELS WITH HIGH CHLORINE CONTENT IN CLINKER PRODUCTION**
VERFAHREN ZUR VERWENDUNG VON ALTERNATIVEN BRENNSTOFFEN MIT HOHEM CHLORGEHALT IN DER KLINKERHERSTELLUNG
PROCÉDÉ PERMETTANT D'UTILISER DES COMBUSTIBLES ALTERNATIFS À HAUTE TENEUR EN CHLORE DANS LA PRODUCTION DE CLINKER

(43) Date of publication of application: 07.08.2019
(73) Proprietor: Cemex Innovation Holding Ltd., 6300 Zug (CH)
(72) Inventor: QUINTERO MORA, Nestor Isaias, 2504 Biel (CH); MEDINA AYALA, Carlos, 67173 Guadalupe, NL (MX); MARTINEZ BURCKHARDT, Juan Carlos, 3076 Worb / BE (CH)
(74) Representative: Novagraaf Technologies
(86) International application number: PCT/EP2016/073498
(87) International publication number: WO 2018/059715

(56) References cited:
- WO-A1-2006/134227
- DE-C1- 19 718 017
- JP-A- 2006 064 251

## Description

### FIELD OF THE INVENTION

The invention proposes a solution to enable the use of alternative fuels, mainly the use of wastes materials or Refuse Derived Fuels (RDF) containing high chlorine content, in a kiln for clinker production, in particular Portland clinker production. The invention consists essentially in introducing in the kiln a required additive, namely sulfur, in order to reduce the evaporating rate of chlorine from the alternative fuels in the kiln and to fix it into clinker, so that build-ups, clogging, blockages and rings formation in the kiln due to the presence of these volatile chloride components are avoided.

### BACKGROUND OF THE INVENTION

The utilization of processed and derived Municipal Solid Wastes (MSW) into Solid Waste Recovery Fuels (SRF) and/or Refuse Derived Fuels (RDF) to substitute fossil fuels like gas, coke or pet coke is of common practice in the cement manufacturing industry to meet CO₂ reduction targets and sustainability objectives by reducing the use of fossil fuels. Such RDF are processed to ensure a homogeneous calorific value around 3000 Kcal/Kg to 8000 Kcal/kg, depending on the various constituents (RDF consists thus largely of combustible components of municipal waste such as plastics and biodegradable waste, including wood, paper, fabric and textiles, paints for instance).

One of the main drawbacks in use RDF in the cement industry is the relatively high content of chlorine of the RDF, mainly related to their content in plastic (PVC), synthetic textiles and paints. RDF chlorine content varies typically from 0.1% weight % to over 3% in weight percent. Conventionally, it is admitted that RDF with chlorine contents below 0.15 weight percent will be regarded as "low chlorine", RDF with chlorine contents between 0.15 and 0.5 weight percent will be characterized as "medium chlorine", whereas RDF with chlorine content above 1.5 weight percent will be referred as "high content chlorine".

The cement manufacturing process can be divided mainly in two parts:
- the clinker production line, involving pre-heating, calcinations and sintering and cooling of a raw meal, typically comprising a pre-heater to pre-heat the raw meal to around 700-800°C with the hot gases from the down-hill combustion, a calciner or pre-calciner where the limestone present in the raw meal is calcined and transformed into lime at temperatures between 800°C and 900 °C, a rotary kiln operated at temperatures between 1300°C - 1500 °C, and a cooler at the exit of the rotary kiln to cool down the clinker before its transformation into cement.
- the cement production line that consist in milling the produced clinker into a finely divided material and adding various additions like gypsum, limestone or various supplementary cementitious materials (pozzolans, fly ashes, slags, etc.) to obtain the different type of cements.

For clarity reason, we will refer in the present invention to the clinker manufacturing process that operates at maximum temperatures located between 1300 °C and 1500 °C.

It is known since many years that at these temperatures the evaporation factor of chlorine is close to 100%, meaning that all the chlorine introduced in the clinker production line will evaporate and accumulate in the atmosphere of the rotary kiln and downstream parts.

It is also known that the HCI content of the fumes and gases exiting the clinker production line through the main flue stack is very low (typically less than 2mg/m³) and that the chlorine content of the produced clinker is located below 0.01 weight percent.

Therefore, the evaporated chlorine inside the cement production lines accumulates and then precipitates on colder surfaces (at temperatures typically located between 800 °C and 1100 °C) (e.g. smoke chamber, riser duct, lower part of last cyclones of the pre-heater, etc.) causing material build-ups, clogging, blockages and kiln rings formation that require production line major shutdowns from several hours to several days, impacting severely the productivity and the economic viability of the production line operating under these conditions.

It is also common knowledge in the clinker industry that the blockage mechanism occurs very rapidly (after few hours of production) when the chlorine input in the fuels is equal or higher than 0.5 weight percent ("medium chlorine" fuel) so the availability of a clinker production in those conditions will completely drop due to the frequency of the stoppages.

To overcome the problems related to the use of RDF as partial or total substitution of fossil fuels, various solutions are applied conventionally in the cement or clinker industry.
- Reducing the chlorine overall input through the combustion (below 0.15 weight percent) will decrease build-ups, clogging or blockages due to high chlorine volatilization. This can be achieved by operating a very low substitution of fossil fuels with chlorine containing RDF or using RDF fuels that contain chlorine below 0.15 weight percent. These solutions are however sometimes very difficult to implement since the requirements to use RDF for both sustainability criteria and economic criteria are increasing and since the availability of low chlorine RDF is decreasing on one hand and the price of such processed fuels is constantly increasing, reaching levels where such fuels are disqualified for use in the clinker production industry.
- A very common practice in the clinker industry is to use the so called by-pass systems, located between the kiln inlet and the preheating system of the clinker production line. Such systems derive part of the hot flue gases from the rotary kiln using an external cooling/precipitation device to extract excess chlorine that would trigger fast build ups and clogging issues [US6068826 or DE 197 18 017, US2007098035, WO2009095120]. The use and implementation of bypass systems to reduce the chlorine content of the flue gases and thus enabling the use of medium or high chlorine RDF while operating the kiln without major shutdowns (frequent mechanical cleaning operations are performed while operating the kiln avoiding regular shutdowns) is considered today as the only technical solution available. The by-pass systems typically enable to remove 3-25 weight % of the evaporated chlorine per hour, so the use of a bypass system enables using RDF with chlorine contents up to 1.5 weight %.

Using by-pass systems technology, however, generates a number of important disadvantages. First the installation of a by-pass system represents an important additional equipment cost ($2-5 MUSD) as well as additional energy consumption to cool down the flue gases extracted from the kiln.

Second, a by-pass system will strongly affect the efficiency of the clinker production since a large amount of calcined raw meal will be extracted together with the volatile chlorine, reducing the amount of clinker produced at the end. Typically, 3-10 weight % of the calcined raw meal is lost as by pass dust, said raw meal, containing from 3% to 25% chlorine, is removed by the by-pass system to accommodate the excess chlorine charge from the RDF. This represents very substantive quantities of by product to be eliminated that range from 105 to 350 tons/day for a mid-size clinker production line of 3500 tons of clinker per day.

Finally, the produced by-pass dust containing chlorine will need to be processed or disposed of, triggering additional costs and/or fees:
- because of its nature, many countries prohibit the landfill of such by products, yet, in countries where this is still possible, the costs per ton will range between 20 EURO to 60 EURO,
- an alternative is represented by the washing of the bypass dust to obtain a chlorine clean raw material and further treatment of the brine solution obtained from washing procedure. The procedure requires investment to be carried out for the material washing and afterward for the neutralization of the brine solution generated. The over costs of the whole process will add to the additional costs already generated by the by pass system.

The invention aims at providing a technical solution to use high chlorine RDF in clinker production processes, enabling highest possible fuel substitution (up to 85%), without the need of a chlorine by-pass and related disadvantages.

The invention applies to existing and new clinker production lines, characterized by fuel consumption per kg of produced clinker ranging from 700 Kcal/kg of clinker to 1500 Kcal/kg of produced clinker (grey and white clinker production, respectively).

### DESCRIPTION OF THE INVENTION

### DEFINITIONS

By raw meal or raw mix, we mean the mixture of materials before entering the pre-heater. The raw meal consists of limestone, clay, iron ore, among other materials that are first dried, crushed, grinded and then fed into the pre-heater.

By hot meal, we mean the calcined material, meaning the raw meal that has passed through the pre-heater and heated-up there to approximately 1000°C, before entering the kiln.

By cement clinker, we mean sintered material coming out the kiln and clinker cooler containing synthetic calcium silicates and calcium aluminates minerals.

By clinkerization or sintering, we mean the physico chemical reactions taking place in the kiln to produce cement clinker.

By cement we mean a binder that sets and hardens and brings materials together. The most common cement is the Ordinary Portland Cement (OPC) and a series of Portland cements blended with other cementitious materials. By LSF (Lime Saturation Factor), we mean the weight ratio between calcium oxide and the sum of aluminum, iron and silicon oxides in the raw meal or in the cement clinker.

By AM (alumina modulus), we mean the weight ratio between aluminum oxide and iron and oxides.

By kiln we mean the rotating chemical reactor transforming hot meal into cement clinker.

By pre-calciner we mean the transformation of the limestone in the raw meal into CaO.

By fuels we mean any material having a calorific value of minimum 300 Kcal/kg.

By carbonaceous fuels, or fossil fuels, we mean fuels that are stripped or mined from earth, for example coal, petroleum, peat or fuel that are by-products of the oil refining process, such as petcoke.

By evaporation factor we mean a percentage representing the amount of a volatile component that remains in a system, calculated with the following equation: 100% - (output weight/input weight).

By Kcal/Kg of clinker we mean the total energy input that is needed to transform raw meal into cooled clinker.

By RDF we mean Refuse Derived Fuels, also called Solid Recovered Fuel / Specified Recovered Fuel (SRF), which is a fuel produced from solid waste through the steps of shredding and dehydrating. It consists mainly of municipal waste, such as plastics and biodegradable waste.

By sulfur content in a fuel, we mean the sulfur content in weight %.

By sulfur content in a raw meal, hot meal and clinker, we mean the sulfur content expressed in SO₃ weight %.

By chlorine content, we mean the chlorine (CI) content in weight %.

The present invention proposes a new radical solution which goes in the opposite direction of what is classically done to enable use of RDF containing medium to high chlorine contents. The proposed solution is based on a process that will reduce the evaporating rate of chlorine from the fuels (RDF) in the kiln (usually over 99%) to fix it into the clinker in order to reduce the chlorine cycle in the cement kiln and maintaining a cleaner atmosphere inside the cement kiln, avoiding clogging or blockages.

International standards (European Standard EN-197-1, ACI 222 and ACI 318) limit in most of the cases the total amount of chlorine in the final cement product to 0.10 weight percent of chlorine. Under normal operating conditions, that is, without the addition of sulfur, the content of the chlorine that is fixed in the clinker at any temperatures from 1300 °C to 1500°C, when using RDF with low, medium or high chlorine contents, is typically lower than 0.01 weight percent.

This fixation of part of the chlorine into the clinker is enabled by using an additive into the kiln that will enable to raise the quantity of fixed chlorine into the clinker from 0.01 weight percent to values ranking from 0.05 to 0.09 weight percent.

The required additive introduced in the kiln in order to fix chlorine into the clinker system is typically a sulfate (SO₄²⁻), in any form known list of sulfated materials such as natural gypsum, synthetic gypsum, fly ash with sulfur content, plasterboard, anhydrite, synthetic anhydrite, plaster of Paris or any similar material containing sulfur that is added to the raw meal, as long as said material has a minimum sulfur quantity of 30% calculated as SO₃ (equivalent) and as long as the maximum recommended sulfur content as SO₃ in the final cement is 3% or 4% , according to the norm EN-197-1 and ASTM-C-150-09, yet higher levels are accepted. The 30% minimum sulfur content ensures the level of sulfur needed to carry on the invention.

An object of the present invention is therefore, a method for reducing the evaporating rate of chlorine from a Refuse Derived Fuel (RDF) used in a kiln for clinker production, without the need of a chlorine by-pass, and fixing the chlorine into the clinker by fixing the added sulfur content into the clinker, said method comprising adding sulfur in the kiln by means of a carbonaceous fuel used and/or sulfur additions to the raw meal,
wherein the RDF has a chlorine content above 1.5% in weight, and
wherein said carbonaceous fuel has 4.5% to 8 % in weight of sulfur and/or said sulfur additions to the raw meal are added as a composition of a sulfated material having a minimum 30% in weight of sulfur expressed as SO₃ in its composition.

Part of the required sulfur can be provided by the fuel when using addition coke or pet coke that may contain between 4.5 to 8 weight percent of sulfur expressed as S.

The added sulfur from the sulfate in the raw meal content or from part of the fuels used, is fixed into the clinker, and depending on the quantity added, the measured SO₃ content in the final clinker varies typically from 1 to 5 weight percent, enabling to fix up to 0.09 weight percent of chlorine in the clinker.

According to a first embodiment of the method of present invention, the sulfur content achieved in the clinker to fix the chlorine is between 1.5% and 5% in weight.

The affinity of sulfur for chloride can be explained by a sulfonation process of sodium chloride (NaCI) and potassium chloride (KCI) so both sulfur and chloride will be fixed into the clinker matrix using an excess of SO₃ availability:

Na₂O + Cl=NaCl + 1/2O₂

NaCl + SO₃=NaCl•SO₃

2K₂O + 4CI= 4KCI + O₂

KCI + SO₃= KCl•SO₃ (slow reaction kinetics)

This fixation mechanism enables to deplete the chlorine concentration in the atmosphere of the kiln and operate the clinker production line in normal productivity conditions, avoiding stoppages and down times.

Clinker production lines capacity vary from typically 1000 tons of clinker/day to 10'000 tons of clinker per day. The fuels consumption in the kiln and potentially in the pre-calciner for those production lines equipped with pre-calciners, is located for Ordinary Portland Clinker between 700 Kcal/kg of clinker to 1000 Kcal/Kg of clinker, depending of the pre-heater efficiency and the recuperation of heat from the clinker cooler. The energy requirements for white clinker in dedicated clinker production lines to manufacture white cement, for instance, is located between 1200 Kcal/Kg of clinker and 1550 Kcal/Kg of clinker due to technical/chemical limitations and higher operating temperatures.

The Table 1 below shows the calorific value ranges of the various fuels used in the cement industry:

**Table 1 - Calorific value ranges (in Kcal/kg) of the various fuels used in the cement industry**

| Fuel | Calorific capacity (Kcal/kg) range | Comments |
|---|---|---|
| Natural gas | 1100 - 12000 | No significant chlorine or sulfur |
| Brown coal | 3000 -7000 | Depending on moisture content, No significant chlorine or sulfur |
| Pet-coke | 7000 - 8500 | Containing from 4-8 weight percent of sulfur |
| RDF | 4000 - 6000 | Depending on composition, containing chlorine |
| Animal meal | 3000 - 4000 | No significant chlorine or sulfur |
| Biomass | 3000-4000 | No significant chlorine or sulfur |
| Fuel oil | 9000 - 11000 | No significant chlorine or sulfur |
| Tyres | 6000-10000 | No significant chlorine or sulfur |

Typical calorific value used in the cement industry is 4500 kcal/kg for RDF (containing chlorine), 7500 kcal/kg for pet-coke (containing average 4.5- 8% sulfur) and 6000 kcal/kg for brown coal.

The fuel feed in a clinker production line is mainly done through the main burner of the kiln and if available to the pre-calciner. Clinker production lines can use single fuel type, but in reality production lines using non-fossil fuels are normally using a mix of different fuels, mixing fossil and non-fossil fuels.

The maximum input of chlorine (through RDF), per hour per ton of clinker produced, that does not trigger any production perturbation (meaning that cleaning during production without impact on production capacity or costs is still possible) in a clinker production line without sulfur additions from the fuel or from the raw meal is known to be around 0.01 weight percent.

Passing this limit, sulfur addition according to the present invention is required to lower the evaporation rate of the chlorine in the kiln and fixing the sulfur in combination with chloride into the clinker.

In any case, the maximum chlorine that can be fixed into the clinker using the invention cannot exceed 0.1 weight percent of the produced clinker (e.g. 1 kg/ton of clinker) to comply with the norms.

Under slightly oxidizing conditions (excess of oxygen of 1-6 % volume in the kiln inlet atmosphere opposite to the main burner) the added sulfur from the fuels or from SO₃ equivalent additions in the raw meal will be fixed into the clinker typically ranging between 1 and 5%. The oxidizing conditions are typically achieved by adapting the ratio between combustion air and fuel or by adding additional air. The oxidizing conditions, represented by the excess oxygen is controlled by an oxygen-probe located into the kiln of by sampling the gases and analyzing them. The table 2 below shows the example of the quantity of sulfur that will be fixed using 100% of fuel requirement in the form of petroleum coke fuel containing 5.5 weight percent of sulfur, for different clinker production lines characterized by increasing values of Kcal/Kg of produced clinker (from 750 Kcal/Kg of clinker that would represent a very energy efficient modern clinker production line, to 1500 Kcal/Kg of clinker that characterized a white clinker production line).

**Table 2: maximum sulfur content of clinkers using 100% petroleum coke fuels having a calorific capacity of 7500 Kcal/kg for various levels of energy requirements to produce clinkers.**

| **Kcal/Kg clinker** | **% weight of Sulfur in clinker** | **% weight of SO3 in clinker** |
|---|---|---|
| 750 | 0.55 | 1.375 |
| 800 | 0.59 | 1.475 |
| 900 | 0.66 | 1.65 |
| 1000 | 0.73 | 1.82 |
| 1500 | 1.1 | 2.75 |

However, not all the sulfur contained in the fuel will be incorporated into the clinker due to evaporation (40-60%) Typically, it is expected that at most 60 % of the sulfur will be fixed into the clinker under oxidizing conditions.

In production according to the field of the invention however, part of the fossil fuel is substituted by RDF containing chlorine, yet no or limited sulfur, so the sulfur content in the clinker coming from the fuels will be lower than the values indicated in table 2, depending on the substitution ratio. For instance, a clinker production according to table 2 operating at 900 Kcal/kg of produced clinker, having a substitution rate of 40% with RDF having a calorific value of 5000 Kcal/kg will limit the quantity of SO3 in the clinker to 0 0.594 weight percent.

Experimental tests performed according to the present invention in various clinker production lines however have shown that the chlorine fixation in the clinker (representing a reduction of the chlorine evaporation rate in the kiln) only increases from the conventional value of 0.01 weight percent of chlorine in the clinker when the level of sulfur fixed in the clinker excesses 1.5 weight percent, preferably 2 weight percent. Typically, the level of sulfur fixed in the clinker is between 1.5% and 5% in weight.

It can be seen that additions of SO₃ equivalent has to be done through the raw meal to achieve the level of sulfur fixed into the clinker, since the sulfur from the fuels is not enough to reach the minimum levels to fix chlorine in clinker (see table 2).

Further experimental results performed at laboratory scale showed that the level of chlorine fixation in the clinker is not dependent on the temperature between 1300°C and 1450°C and mainly depends on the simultaneous sulfur fixation in the clinker (Example 1).

According to a second embodiment of the present invention, the addition of sulfur is done by enriching the raw meal with sulfur additions, the sulfated material being chosen from the group consisting of natural gypsum, synthetic gypsum, fly ash with sulfur content, plasterboard, anhydrite, synthetic anhydrite, plaster of Paris or a combination.

In particular, plaster of Paris, synthetic gypsum, natural anhydrites or hemihydrates, or any other mineral or waste mineral containing at least 30% of SO3 respecting clinker and cement norms in all aspects (composition, limitations in heavy metals, etc.).

### BRIEF DESCRIPTION OF THE FIGURES

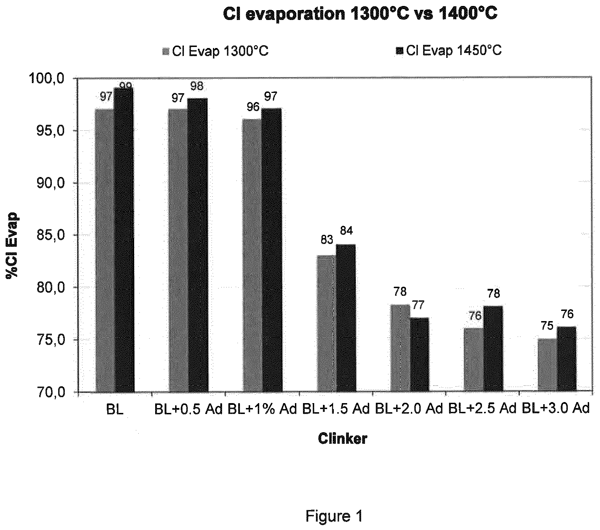

Figure 1: shows the evaporation factor of chlorine in laboratory synthesized clinkers as a function of the added sulfur at 2 temperatures: 1300°C and 1450 °C. "BL" means "Base Line" and "Ad" means Additive (sulfur addition by means of gypsum addition).

### EXAMPLES OF THE INVENTION

### Example 1:

Laboratory tests were performed on synthesized Portland clinkers prepared from CaO, SiO₂, Al₂O₃, Fe₂O₃ commercially available chemical powders.
Raw samples weight: Press pellet samples of 30 g
LSF, AM and other modulus of the synthesized clinkers are typical values of Lime Saturation
Factor (LSF) of 95-96, Silica Ratio (SR) of 2.4-2.5 and Alumina Ratio of 1.3-1.4.
Chlorine additions: all samples contained 0,1%
Sulfur additions using natural gypsum and expressed in weight percent of the corresponding clinker.
Furnace used: chamber furnace under air
Treatment duration at temperature (1300 or 1450°C): 2hours
Measurements: Sulfur (expressed as SO₃) and chlorine were measured using X-Ray fluorescence.

The results obtained are shown in Figure 1.

One can see that the chlorine evaporation significantly decreases when 1.5% in weight of sulfur additive is added. This reduction is even more significant when amounts between 2% in weight and 3% in weight are added. The reduction in the chlorine evaporation means that the difference in chlorine remains fixed in the clinker.

Examples 2 to 4 are field tests at a cement plant and intend to confirm the results obtained in Example 1.

### Example 2:

The same approach used in Example 1 was used in this Example, in a cement plant.

The cement plant where the trial was carried out is equipped with a 4 stage preheater. The kiln has a length of 68 meters and 4% inclination. Several process parameters (such as raw mix, fuel, kiln and clinker related parameters), as well as amounts of chlorine in clinker, were measured prior to any increase in SO3 content according to the method of the invention. Said process parameters can be observed in Table 3.

The fossil fuel used was petcoke containing 4.6 weight percent of sulfur expressed as S, while RDF was also added as alternative fuel, containing 0.6 weight percent of chlorine.

**Table 3 - Process parameters before and after sulfur addition**

| Plant A (Gray Clinker) | | | |
|---|---|---|---|
| **Process** | **Variable** | **Before** | **After** |
| Kiln | Clinker prod. (tpd) | 1650 | 1680 |
| Kiln | Speed (rpm) | 1.6 | 1.7 |
| Kiln | O2 (%) | 6 | 6 |
| Kiln | Backend Temp. (°C) | 845 | 852 |
| Kiln | Energy consumption (kcal/kg clk) | 899 | 905 |
| Raw Mix | Lime Saturation Factor (LSF) | 99 | 99 |
| Raw Mix | Silica Ratio | 2.4 | 2.4 |
| Raw Mix | SO3 (%) | 0.25 | 1.25 |
| Raw Mix | Cl (%) | 0.05 | 0.05 |
| Clinker | LSF | 95 | 95 |
| Clinker | SR | 2.3 | 2.3 |
| Clinker | SO3 (%) | 0.70 | 2.0 |
| Clinker | Cl (%) | 0.015 | 0.085 |
| Clinker | Free lime (%) | 1.3 | 1.4 |
| Petcoke | Sulfur (S) | 4.6 | 4.6 |
| Alternative Fuel | Chlorine (Cl) | 0.6 | 0.6 |
| Energy | Substitution rate (%) of RDF Kcal/Kcal | 68 | 78 |

In the "before" scenario, the clinker production was 1650 tons per day. The raw mix had a SO3 content of 0.25% in weight. It was measured a SO3 amount fixed in the clinker of 0.70 weight percent.

To test the method of the invention, the SO3 content in the raw mix was increased from 0.25 weight percent to 1.25 weight percent, by increasing the amount of natural gypsum. The other raw mix parameters remained the same. The clinker was analyzed and it was observed that the SO3 fixed in the clinker increased from 0.70 weight percent to 2.0 weight percent, as well as the chlorine fixed in the clinker, from 0.015 weight percent before to 0.085 weight percent after, still below the limits imposed by the International Standards. Production was increased from 1650 tons per day to 1680 tons per day.

The clinker properties were not affected.

### Example 3:

The same approach used in Example 1 was used in this example, this time in a plant with a higher capacity.

The parameters registred can be found in Table 4.

The fossil fuel used was petcoke containing 7 weight percent of sulfur expressed as S, while RDF was also added as alternative fuel, containing 1.05 weight percent of chlorine.

**Table 4 - Process parameters before and after sulfur addition**

| Plant B (Gray Clinker) | | | |
|---|---|---|---|
| **Process** | **Variable** | **Before** | **After** |
| Kiln | Clinker prod. (tpd) | 3255 | 3301 |
| Kiln | Speed (rpm) | 3.2 | 3.3 |
| Kiln | O2 (%) | 2.5 | 3.1 |
| Kiln | Backend Temp. (°C) | 1146 | 1167 |
| Kiln | Energy consumption (kcal/kg clk) | 811 | 816 |
| Raw Mix | LSF | 98 | 98 |
| Raw Mix | SR | 2.6 | 2.6 |
| Raw Mix | SO3 (%) | 0.05 | 1.5 |
| Raw Mix | CI (%) | 0.01 | 0.01 |
| Clinker | LSF | 97 | 97 |
| Clinker | SR | 2.6 | 2.6 |
| Clinker | SO3 (%) | 0.88 | 3.05 |
| Clinker | Cl (%) | 0.01 | 0.096 |
| Clinker | Free lime (%) | 1.5 | 1.6 |
| Petcoke | Sulfur (S) | 7 | 7 |
| Alternative Fuel | Chlorine (Cl) | 1.05 | 1.05 |
| Energy | Substitution rate (%) of RDF Kcal/Kcal | 50 | 58 |

In the "before" scenario, the clinker production was 3255 tons per day. The raw mix had a SO3 content of 0.1% in weight. It was measured a SO3 amount fixed in the clinker of 0.88 weight percent.

To test the method of the invention, the SO3 content in the raw mix was increased from 0.1 weight percent to 1.5 weight percent, by using anhydrite. The other raw mix parameters remained the same. The clinker was analyzed and it was observed that the SO3 fixed in the clinker increased from 0.88 weight percent to 3.05 weight percent, as well as the chlorine fixed in the clinker, from 0.01 weight percent before to 0.096 weight percent after, still below the limits imposed by the International Standards. Production was increased from 3255 tons per day to 3301 tons per day.

The clinker properties were not affected.

### Example 4

The same approach used in Examples 1 and 2 was used in this example, this time in a white cement production line. The parameters registred can be found in Table 5.

The plant where the test was carried out has a 4 stage preheater, a kiln with a 68 meter length and 3% inclination.

The fuels used were the same as in Example 2. The fossil fuel used was petcoke containing 7 weight percent of sulfur expressed as S, while RDF was also added as alternative fuel, containing 1.05 weight percent of chlorine.

**Table 5 - Process parameters before and after sulfur addition.**

| Plant C (White Clinker) | | | |
|---|---|---|---|
| **Process** | **Variable** | **Before** | **After** |
| Kiln | Clinker prod. (tpd) | 1302 | 1310 |
| Kiln | Speed (rpm) | 2.5 | 2.5 |
| Kiln | O2 (%) | 2.0 | 2.1 |
| Kiln | Backend Temp. (°C) | 1055 | 1042 |
| Kiln | Energy consumption (kcal/kg clk) | 1290 | 1303 |
| Raw Mix | LSF | 96 | 97 |
| Raw Mix | SR | 4.3 | 4.3 |
| Raw Mix | SO3 (%) | 0.12 | 1.0 |
| Raw Mix | Cl (%) | 0.1 | 0.1 |
| Clinker | LSF | 97 | 97 |
| Clinker | SR | 4.3 | 4.3 |
| Clinker | SO3 (%) | 1.0 | 2.7 |
| Clinker | Cl (%) | 0.02 | 0.09 |
| Clinker | Free lime (%) | 1.6 | 1.8 |
| Petcoke | Sulfur (S) | 7 | 7 |
| Alternative Fuel | Chlorine (Cl) | 1.05 | 1.05 |
| Energy | Substitution rate (%) of RDF Kcal/Kcal | 48 | 58 |

In the "before" scenario, the white clinker production was 1302 tons per day. The raw mix had a SO3 content of 0.12% in weight. It was measured a SO3 amount fixed in the clinker of 1.0 weight percent.

To test the method of the invention, the SO3 content in the raw mix was increased from 1.0 weight percent to 2.7 weight percent, by using anhydrite. The other raw mix parameters remained the same. The white clinker was analyzed and it was observed that the SO3 fixed in the clinker increased from 1.0 weight percent to 2.7 weight percent, as well as the chlorine fixed in the clinker, from 0.02 weight percent before to 0.09 weight percent after, still below the limits imposed by the International Standards. Production was increased from 1302 tons per day to 1310 tons per day.

The white clinker properties were not affected by the increase in sulfur.

It can be seen from the various examples and tests that additional Sulfur additions in the raw meal is requested to reach the level of chlorine fixation in the clinker that will allow to operate the clinker production line using RDF without installing by-pass systems.

The required amount of sulfur according to the invention is mainly provided by the sulfur source added to the raw meal, even in the case where the carbonaceous fuel used together with RDF contains up to 7% SO3.

Typically, the weight ratio between the sulfur provided by the fuel and the sulfur content in the clinker is located between 0 (in the case the carbonaceous fuel does not contain sulfur) and 0.15 as it was also determined from undisclosed results and tests.

Typically, the level of sulfur to be achieved in the clinker to fix the chlorine is located between 1.5% and 5% in SO3 equivalent weight.

According to table 2, the quantity of SO3 in the clinker coming from the fuel will be limited to 0.9-1% % weight depending on the substitution of carbonaceous fuel with RDF.

Therefore, the final SO3 content in the clinker according to the invention will come mainly from the added SO3 in the raw meal. The minimum contribution of the SO3 coming from the raw meal in the final clinker is 50 to 70 weight %, preferably 55 to 65 weight %.

## Claims

1. Method for reducing the evaporating rate of chlorine from a Refuse Derived Fuel (RDF) used in a kiln for clinker production, without the need of a chlorine by-pass, and fixing the chlorine into the clinker by fixing the added sulfur content into the clinker, said method comprising adding sulfur in the kiln by means of a carbonaceous fuel used and/or sulfur additions to the raw meal,
wherein the RDF has a chlorine content above 1.5% in weight, and
wherein said carbonaceous fuel has 4.5% to 8 % in weight of sulfur and/or said sulfur additions to the raw meal are added as a composition of a sulfated material having a minimum 30% in weight of sulfur expressed as SO₃ in its composition.

2. Method according to claim 1 **characterized in that** the sulfated material is chosen from the group consisting of natural gypsum, synthetic gypsum, fly ash with sulfur content, plasterboard, anhydrite, synthetic anhydrite, plaster of Paris or a combination thereof.

3. Method according to claim 1, wherein the sulfur content achieved in the clinker to fix the chlorine is between 1.5% and 5% in weight.

## Patentansprüche

1. Verfahren zur Verringerung der Verdampfungsrate von Chlor aus einem in einem Ofen zur Klinkerherstellung verwendeten Ersatzbrennstoff (RDF) ohne die Notwendigkeit eines Chlor-Bypasses und zur Fixierung des Chlors in dem Klinker durch Fixierung des zugesetzten Schwefelgehalts in dem Klinker, wobei das Verfahren die Zugabe von Schwefel in dem Ofen mittels eines verwendeten kohlenstoffhaltigen Brennstoffs und/oder Schwefelzusätzen zu dem Rohmehl umfasst,
wobei das RDF einen Chlorgehalt von mehr als 1,5 Gew.-% aufweist, und
wobei der kohlenstoffhaltige Brennstoff 4,5 bis 8 Gew.-% Schwefel aufweist und/oder die Schwefelzusätze zum Rohmehl als Zusammensetzung eines sulfatierten Materials mit mindestens 30 Gew.-% Schwefel, ausgedrückt als SO₃, in seiner Zusammensetzung zugesetzt werden.

2. Verfahren nach Anspruch 1, **dadurch gekennzeichnet, dass** das sulfatierte Material ausgewählt wird aus der Gruppe bestehend aus natürlichem Gips, synthetischem Gips, Flugasche mit Schwefelgehalt, Gipskarton, Anhydrit, synthetischem Anhydrit, Gips aus Paris oder einer Kombination davon.

3. Verfahren nach Anspruch 1, **dadurch gekennzeichnet, dass** der im Klinker erreichte Schwefelgehalt zur Fixierung des Chlors zwischen 1,5 und 5 Gew.-% liegt.

## Revendications

1. Procédé pour réduire le taux d'évaporation de chlore d'un combustible dérivé de déchets (RDF) utilisé dans un four pour la production de clinker, sans avoir besoin d'une dérivation du chlore, et pour fixer le chlore dans le clinker en fixant la teneur en soufre ajoutée dans le clinker, ledit procédé comprenant l'ajout de soufre dans le four au moyen d'un combustible carboné utilisé et/ou des ajouts de soufre à la farine brute,
dans lequel le RDF a une teneur en chlore supérieure à 1,5 % en poids, et
dans lequel ledit combustible carboné a une teneur en soufre de 4,5 % à 8 % en poids et/ou lesdits ajouts de soufre à la farine brute sont ajoutés sous la forme d'une composition d'un matériau sulfaté ayant un minimum de 30 % en poids de soufre exprimé sous forme SO₃ dans sa composition.

2. Procédé selon la revendication 1 **caractérisé en ce que** le matériau sulfaté est choisi dans le groupe constitué par le gypse naturel, le gypse synthétique, les cendres volantes contenant du soufre, les plaques de plâtre, l'anhydrite, l'anhydrite synthétique, le plâtre de Paris ou une combinaison de ceux-ci.

3. Procédé selon la revendication 1, dans lequel la teneur en soufre atteinte dans le clinker pour fixer le chlore est comprise entre 1,5% et 5% en poids.
